# EUROPÄISCHE PATENTSCHRIFT

(11) **EP 2 326 940 B1**
(45) Veröffentlichungstag und Bekanntmachung des Hinweises auf die Patenterteilung: **11.12.2013**
(21) Anmeldenummer: 09776315.5
(22) Anmeldetag: 13.01.2009
(51) Int. Cl.: G01N 23/04, G01M 17/013

(54) **VORRICHTUNG ZUR MATERIALPRÜFUNG VON PRÜFOBJEKTEN MITTELS RÖNTGENSTRAHLUNG**
DEVICE FOR TESTING THE MATERIAL OF TEST OBJECTS BY MEANS OF X-RAY RADIATION
DISPOSITIF DE TEST DE MATÉRIAUX D'OBJETS À TESTER AU MOYEN DE RAYONS X

(30) Priorität: 24.09.2008 WO PCT/EP2008/008072
(43) Veröffentlichungstag der Anmeldung: 01.06.2011
(73) Patentinhaber: GE Sensing & Inspection Technologies GmbH, 50354 Hürth (DE)
(72) Erfinder: KRÄMER, Jan, 23568 Lübeck (DE); STUKE, Ingo, 23858 Reinfeld (DE); BRETZKE, Nicolas, 24245 Kirchbarkau (DE); LUX, Holger, 22941 Bargteheide (DE); WÜSTENBECKER, Michael, 22952 Lütjensee (DE); GÜNZLER, Til, Florian, 20099 Hamburg (DE)
(74) Vertreter: Bauer Vorberg Kayser Patentanwälte
(86) Internationale Anmeldenummer: PCT/EP2009/000152
(87) Internationale Veröffentlichungsnummer: WO 2010/034361

(56) Entgegenhaltungen:
- DE-B3- 10 260 883
- US-A- 4 472 822
- US-A- 4 802 195
- US-A1- 2004 109 532
- DANIEL L. SCHMOLDT, LUIS G. OCCEÑA, A. LYNN ABBOTT, NAND K. GUPTA: "NONDESTRUCTIVE EVALUATION OF HARDWOOD LOGS: CT SCANNING, MACHINE VISION AND DATA UTILIZATION" NONDESTRUCTIVE TESTING EVALUATION, Bd. 15, 1999, Seiten 279-309, XP002531958

## Beschreibung

Die Erfindung betrifft eine Vorrichtung zur Materialprüfung von Prüfobjekten mittels Röntgenstrahlung nach dem Oberbegriff von Anspruch 1.

Eine bewährte Räderprüfanlage umfasst ein Röntgensystem mit einer Röntgenröhre und einem Bildverstärker, die an einem um eine horizontale Achse schwenkbaren C-Arm montiert sind. Ein zu prüfendes Rad wird mittels eines Rollenförderers zugefördert und von einem horizontal verschiebbaren Träger, der mit zwei rollenbestückten Greifarmen versehen ist, aufgenommen und in die Prüfposition verschoben. In der Prüfposition wird für mehrere Schwenkpositionen des C-Armes jeweils ein Röntgenscan aufgenommen, indem das Rad durch Antrieb der am unteren Felgenhorn angreifenden Greiferrollen um seine Achse rotiert und mittels des Trägers translatorisch verschoben wird. Es handelt sich somit um eine dreiachsige Prüfvorrichtung. Nach der Röntgenprüfung wird das Rad von dem Träger abgefördert und an einen ausgangsseitigen Rollenförderer übergeben. Danach wird der Träger zur Eingangsseite zurückgefahren, um das nächste zu prüfende Rad aufzunehmen.

Bei einer aus DE 101 53 379 B4 bekannten mehrachsigen Räderprüfanlage steht die Röntgenvorrichtung fest, wobei das Rad um eine in der Transportebene liegende Querachse schwenkbar ist und durch Antrieb von am unteren Felgenhorn angreifenden Greiferrollen um seine Achse rotiert wird. Um die Schwenkbarkeit des Rades um die Querachse zu ermöglichen, sind Transportketten zum Zu- und Abfördern des zu prüfenden Rades an Schwenkarmen drehbar gelagert, die während der Röntgenprüfung abgeschwenkt werden. Dieser Aufbau ist außerordentlich kompliziert.

DE 202 08 174 U1 offenbart eine dreiachsige Räderprüfanlage mit einem drehbaren Trägerkarussell zum Zu- und Abführen von Prüfobjekten in eine bzw. aus einer Prüfposition, in der das zu prüfende Rad mittels Profilrädern um die eigene Achse gedreht wird. Ein die Röntgenvorrichtung tragender C-Bogen ist um zwei zueinander senkrechte Horizontalachsen schwenkbar, was konstruktiv sehr aufwendig ist. Das Trägerkarussell ist außerordentlich raumgreifend im Vergleich zu translatorischen Fördervorrichtungen.

Es ist eine einachsige Räderprüfvorrichtung nach dem Oberbegriff von Anspruch 1 mit einem LDA (lineares Dioden-Array)-Zeilendetektor bekannt. Für die Röntgenprüfung eines Rades wird das Rad mittels eines Kettenförderers zu der Röntgenvorrichtung transportiert und von einer innen angreifenden Greifeinrichtung aus der Transportebene in eine Prüfposition angehoben und dort mittels an der Greifeinrichtung vorgesehener Rotationsmittel um seine Achse rotiert. Eine horizontale Schwenkung der Röntgenvorrichtung oder des Rades ist nicht erforderlich, wodurch der Aufwand gegenüber den vorgenannten Prüfvorrichtungen verringert werden kann. Aufgrund unterschiedlich dickwandiger Bereiche des Prüfobjekts besteht die grundsätzliche Schwierigkeit, in allen Bereichen des Prüfobjekts eine hinreichende Bildqualität zu erhalten.

D. L. Schmoldt et al., "Nondestructive evaluation of harmonic logs: CT scanning, machine vision and data utilization", Nondestr. Test. Eval. Vol. 15 (1999), pp. 279-309, offenbart eine Vorrichtung zur Röntgenprüfung von Baumstämmen mit einem tangentialen Scanverfahren, bei der das Prüfobjekt von seiner Mantelfläche her bestrahlt wird. Die tangentiale Geometrie macht es erforderlich, dass das Prüfobjekt während der Prüfung simultan mit der Rotation in einer Richtung senkrecht zu der Rotationsachse verschoben wird. Aufgrund dieser zusätzlich erforderlichen Verschiebung des Prüfobjekts, die einen wesentlich erhöhten Aufwand für die Manipulation des Prüfobjekts während der Messung und die Auswertung der Messdaten mit sich bringt, ist diese Vorrichtung nicht gattungsgemäß.

Die Aufgabe der Erfindung besteht darin, eine einfach aufgebaute Prüfvorrichtung bereitzustellen, die eine hohe Bildqualität in allen Bereichen des Prüfobjekts bei hohem Durchsatz erreicht.

Die Erfindung löst diese Aufgabe mit den Merkmalen von Anspruch 1. Erfindungsgemäß handelt es sich um eine einachsige Prüfvorrichtung, d.h. ein vollständiges Röntgenbild eines Prüfobjekts kann lediglich durch Rotation von Prüfobjekt und Röntgenvorrichtung relativ zueinander um eine im Wesentlichen vertikale Rotationsachse erhalten werden. Weitere Rotationen oder translatorische Bewegungen von Prüfobjekt und Röntgenvorrichtung relativ zueinander sind während der Prüfung nicht erforderlich, wodurch der Aufwand entsprechend reduziert werden kann.

Erfindungsgemäß weist der Röntgendetektor mindestens zwei Detektionsabschnitte auf, die jeweils zur Erfassung des Prüfobjekts über einen vollständigen Radialquerschnitt eingerichtet sind. Ein Radialquerschnitt ist ein von der Rotationsachse sich nach radial nach außen erstreckender Querschnitt; insbesondere umfasst ein durch die Rotationsachse laufender Gesamtquerschnitt zwei Radialquerschnitte. Dies ermöglicht es beispielsweise bei zwei Detektionsabschnitten, mit einer vollständigen Umdrehung um 360° zwei vollständige Einzelbilder des Prüfobjekts aufzunehmen, wodurch die Bildqualität gegenüber der Aufnahme von nur einem Einzelbild in jedem Fall gesteigert werden kann. Insbesondere kann, indem vorzugsweise jedes Einzelbild mit unterschiedlichen Betriebsparametern für die Röntgenvorrichtung aufgenommen wird, beispielsweise ein Einzelbild mit an dickwandige Bereiche des Prüfobjekts angepassten Betriebsparametern und ein Einzelbild mit an dünnwandige Bereiche des Prüfobjekts angepassten Betriebsparametern aufgenommen werden. Auf diese Weise werden sowohl von dickwandigen Bereichen als auch von dünnwandigen Bereichen Röntgenbilder hoher Qualität erhalten. Es können auch mehr als zwei vollständige Radialquerschnitte des Prüfobjekts erfassende Detektionsabschnitte vorgesehen sein, um mit einer vollständigen Umdrehung um 360° mehr als zwei vollständige Einzelbilder des Prüfobjekts oder alternativ mit einer Umdrehung um weniger als 360° zwei vollständige Einzelbilder des Prüfobjekts zu erhalten. Als einzustellende Betriebsparameter kommen insbesondere Verstärkungsfaktoren für den Röntgendetektor in Betracht. Vorzugsweise sind daher die mindestens zwei Detektionsabschnitte unabhängig ansteuerbar, insbesondere durch Anlegen unterschiedlicher Verstärkungsfaktoren. Denkbar sind beispielsweise auch unterschiedliche Röntgenenergien und/oder -leistungen für die Röntgenröhre.

In einer besonders bevorzugten Ausführungsform wird jedes Einzelbild jeweils über einen Rotationswinkel von weniger als 360°, insbesondere etwa 180° aufgenommen.

Die Erfindung ist vorzugsweise auf die Prüfung im Wesentlichen rotationssymmetrischer Objekte, die durch Drehung um 360°/n mit n = 2 oder 3 oder ... in sich selbst übergehen, anwendbar. Eine besonders bevorzugte Anwendung betrifft die Prüfung von Aluminiumgussrädern für Kraftfahrzeuge. Andere denkbare Anwendungen betreffen beispielsweise Kraftfahrzeugreifen oder Bremsscheiben. Die Erfindung ist aber auch auf die Prüfung nicht-rotationssymmetrischer Teile, beispielsweise Fahrwerksteile, anwendbar.

Die Erfindung wird im Folgenden anhand vorteilhafter Ausführungsformen unter Bezugnahme auf die beigefügten Figuren erläutert. Dabei zeigt:
- Fig. 1:: eine perspektivische Ansicht einer Prüfvorrichtung im Ladezustand;
- Fig. 2:: eine Draufsicht auf die Prüfvorrichtung aus Fig. 1;
- Fig. 3:: eine Ansicht auf die Prüfvorrichtung aus Fig. 1 aus der Transportrichtung;
- Fig. 4:: eine schematische perspektivische Ansicht einer Detektoranordnung in einer anderen Ausführungsform;
- Fig. 5:: eine schematische perspektivische Ansicht einer Detektoranordnung in einer weiteren Ausführungsform;
- Fig. 6:: eine perspektivische Ansicht einer Prüfvorrichtung in einer weiteren Ausführungsform im Ausschnitt;
- Fig. 7:: eine Ansicht auf die Prüfvorrichtung aus Fig. 6 aus der Transportrichtung; und
- Fig. 8:: eine perspektivische Ansicht einer Prüfvorrichtung im Ladezustand in einer weiteren Ausführungsform.

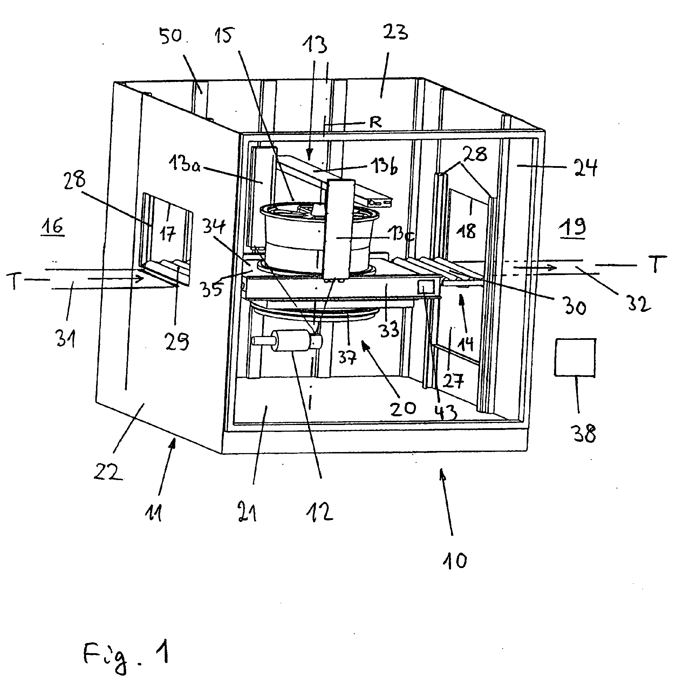

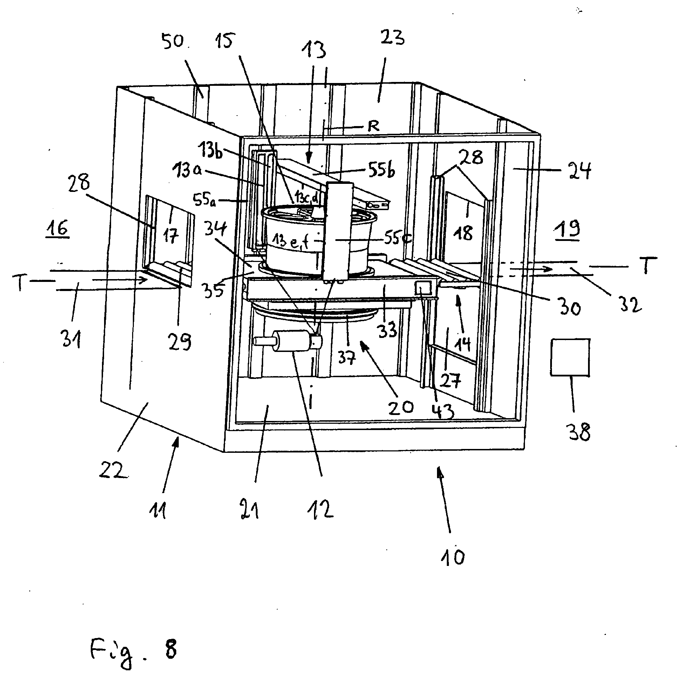

Die Prüfvorrichtung 10 umfasst eine Strahlenschutzkabine 11 und eine in der Strahlenschutzkabine 11 angeordnete Röntgenvorrichtung 20, die eine Röntgenquelle 12 zum Durchstrahlen eines auf einem Träger 33 angeordneten Prüfobjekts 15 und einen Röntgendetektor 13 zum Aufzeichnen der durch das Prüfobjekt 15 tretenden Strahlung aufweist. Die Strahlenschutzkabine 11 schirmt die Umgebung im Betrieb vollständig gegenüber der von der Röntgenquelle 12 erzeugten Röntgenstrahlung ab und umfasst zu diesem Zweck Seitenwände 22 bis 25, eine Deckenwand 49 und gegebenenfalls eine Bodenwand 21, die beispielsweise aus Platten mit einer Bleilage und Stützstreben 50 aufgebaut sind. Die Deckenwand 49 und die Seitenwand 25 sind für eine bessere Einsehbarkeit in Figuren 1 und 8 weggelassen.

Eine eingangsseitige Seitenwand 22 weist eine Eingangsöffnung 17 für zu prüfende Prüfobjekte 15 auf. Eine gegenüberliegende ausgangsseitige Seitenwand 24 weist eine Ausgangsöffnung 18 für geprüfte Prüfobjekte 15 auf. Die Strahlenschutzkabine 11 weist jeweils einen in Führungsschienen 28 beispielsweise mittels Rollen 51 geführten Schieber 26, 27 zum Verschließen der Eingangsöffnung 17 und Ausgangsöffnung 18 im Prüfbetrieb und zum Öffnen im Ladebetrieb auf. Eine der Seitenwände 22 bis 25 kann vorzugsweise eine nicht gezeigte Tür aufweisen, um die Begehbarkeit der Kabine durch Servicepersonal zu ermöglichen.

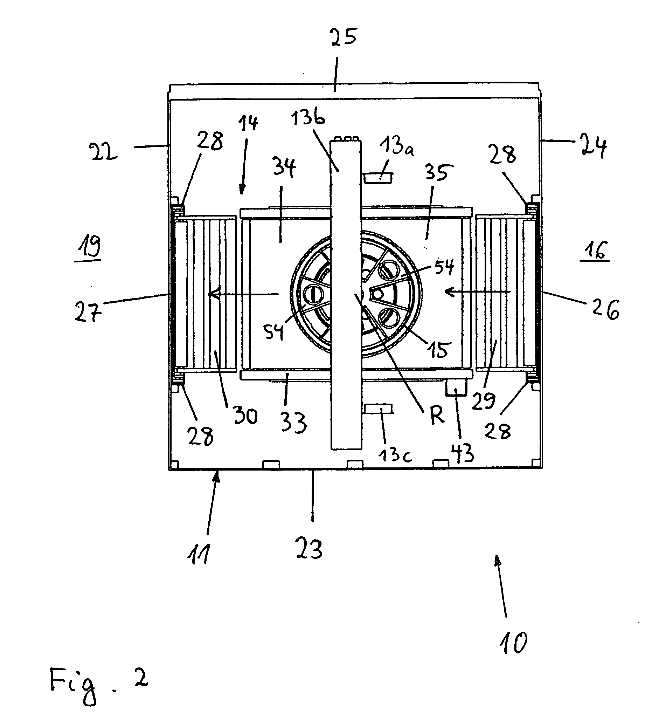

Die Prüfvorrichtung 10 umfasst weiterhin eine translatorische Fördervorrichtung 14 zur seriellen Förderung von Prüfobjekten 15 durch die Strahlenschutzkabine 11 in einer Transportrichtung, wie beispielsweise in Figuren 1, 2 und 6 mittels Pfeilen angedeutet ist. Die Fördervorrichtung 14 umfasst eine im Inneren der Strahlenschutzkabine 11 angeordnete Zufördereinrichtung 29 zum Zufördern von Prüfobjekten zu dem Träger 33, eine im Inneren der Strahlenschutzkabine 11 angeordnete Abfördereinrichtung 30 zum Abfördern von Prüfobjekten von dem Träger 33 und gegebenenfalls entsprechende externe Förderer 31, 32 auf der Eingangsseite 16 und der Ausgangsseite 19. Die Fördereinrichtungen 29, 30 sind beispielsweise als Rollenförderer ausgebildet, wobei die Rollen für eine präzise Übergabe zu bzw. von dem Träger 33 aktiv angetrieben sein können. Die Fördereinrichtungen 29, 30 und die Förderer 31, 32 definieren eine durchgehende Transportebene T, siehe Figur 1. Die Fördereinrichtung 29 ist an dem Schieber 26 und die Fördereinrichtung 30 an dem Schieber 27 befestigt, so dass ein Verschieben der Schieber 26, 27 in die Offenstellung gleichzeitig die Fördereinrichtungen 29, 30 in die Transportebene verschiebt und ein Verschieben der Schieber 26, 27 in die Geschlossenstellung gleichzeitig die Fördereinrichtungen 29, 30 aus der Transportebene heraus verschiebt.

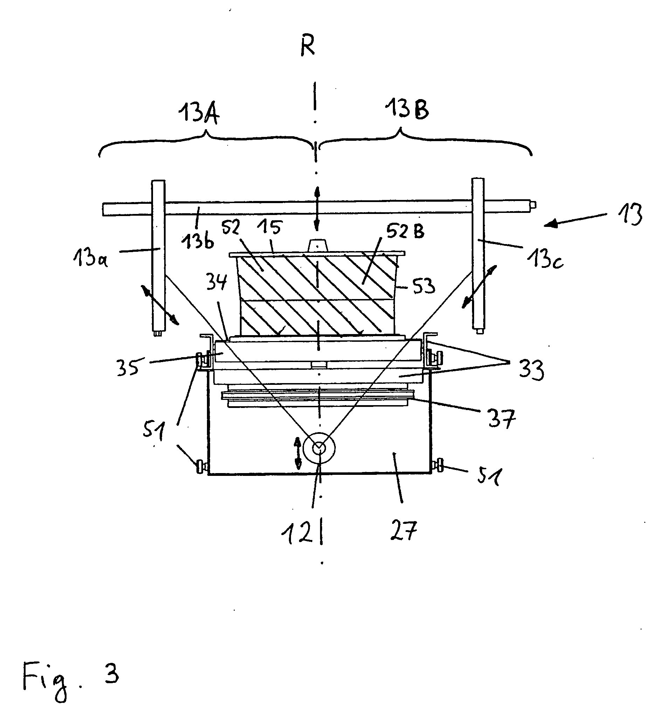

In den Ausführungsformen gemäß Figuren 1 bis 3 und 8 ist die Röntgenröhre 12 eine Fächerstrahl- (fan beam) Röntgenröhre mit einem Fächerwinkel von mindestens 45°, vorzugsweise mindestens 60°, weiter vorzugsweise mindestens 75°, beispielsweise etwa 90°, so dass bei geeigneter Anordnung der Röntgenröhre 12 übliche Kraftfahrzeugräder über ihren gesamten Querschnitt durchleuchtet werden können, siehe insbesondere Fig. 3. In dieser Ausführungsform liegt der zentrale Röntgenstrahl aus der Röntgenquelle 12 auf der Rotationsachse R.

Der Röntgendetektor 13 ist ein zeilenförmiger oder aus zeilenförmigen Abschnitten zusammengesetzter lineares Dioden-Array-(LDA-)Detektor und ist zweckmäßigerweise geeignet dimensioniert und angeordnet, um den gesamten Röntgenstrahl aufzuzeichnen. Der Röntgendetektor 13 ist vorzugsweise bogenförmig, insbesondere C-, U- oder L-förmig, um das Prüfobjekt herum angeordnet, so dass bei gegebenem Detektionswinkel die Länge des Detektors gegenüber einer einzigen Detektorzeile erheblich reduziert werden kann. Zweckmäßigerweise besteht der Röntgendetektor 13 aus einer Mehrzahl von in einem Winkel zueinander angeordneten Detektorelementen 13a, 13b, 13c. Im Ausführungsbeispiel gemäß Fig. 1 bis 3 umfasst der U-förmige Röntgendetektor 13 beispielsweise drei Detektorzeilen 13a, 13b, 13c mit einer horizontalen Detektorzeile 13b und zwei vertikalen Detektorzeilen 13a, 13c. Der Röntgendetektor 13 ist etwa symmetrisch um die Rotationsachse R angeordnet.

Wie aus Fig. 3 ersichtlich ist, ist der Röntgendetektor 13 vorzugsweise ausreichend dimensioniert und geeignet angeordnet, um zwei vollständige Radialquerschnitte 52A, in Fig. 3 links von der Rotationsachse R, und 52B, in Fig. 3 rechts von der Rotationsachse R, des Prüfobjekts 15 zu erfassen. Der Detektor 13 lässt sich daher in einen Detektionsabschnitt 13A zur Erfassung des vollständigen Radialquerschnitts 52A und in einen Detektionsabschnitt 13B zur Erfassung des vollständigen Radialquerschnitts 52B zergliedern, wobei in diesem Beispiel die mittlere Detektorzeile 13b jeweils hälftig beiden Detektionsabschnitten 13A, 13B zugeordnet ist.

Um eine Anpassung an Prüfobjekte 15 unterschiedlicher Abmessungen zu ermöglichen, sind die Röntgenquelle 12 und/oder der Röntgendetektor 13 bzw. die Detektorelemente 13a, 13b, 13c vorzugsweise relativ zueinander verschiebbar, insbesondere in einer Ebene senkrecht zu der Transportrichtung, wie dies in Figur 3 mit Doppelpfeilen angedeutet ist. Insbesondere kann das horizontale Detektorelement 13b vertikal bzw. mit einer Vertikalkomponente und/oder die vertikalen Detektorelemente 13a, 13c horizontal bzw. mit einer Horizontalkomponente verschiebbar sein. Alternativ oder zusätzlich kann die Röntgenquelle 12 insbesondere vertikal bzw. mit einer Vertikalkomponente verschiebbar sein. Die Einstellung der Position der Röntgenquelle 12 und des Röntgendetektors 13 erfolgt pro Prüfobjekt 15 jeweils einmal vor dem Einschalten der Röntgenröhre 12; während der Röntgenprüfung erfolgt keine Verschiebung der Röntgenquelle 12 oder des Röntgendetektors 13.

Der Träger 33 weist eine zweckmäßigerweise im Wesentlichen ebene Auflagefläche 34 auf, auf der das Prüfobjekt 15 während des Transports und der gesamten Röntgenprüfung einfach aufliegt, ohne mittels Greifeinrichtungen oder dergleichen gehalten werden zu müssen. Die Auflagefläche 34 wird insbesondere von der Oberseite eines endlos umlaufenden Fördermittels, hier des Transportbandes 35 gebildet. Das Transportband 35 wird mittels eines Antriebs 43 angetrieben, um ein Prüfobjekt 15 von der Zufördereinrichtung 29 in die Prüfposition und ein geprüftes Prüfobjekt 15 zu der Abfördereinrichtung 30 zu transportieren. Der Träger 33 ist daher als translatorischer Förderer ausgebildet und Teil der durchgehenden Fördervorrichtung 14. Das Transportband 35 ist zweckmäßigerweise im Wesentlichen röntgentransparent; allgemeiner trifft dies auf den Träger 33 mindestens in dem durchstrahlten Bereich zu.

Zur Durchführung der Röntgenprüfung eines Prüfobjektes 15 ist der Träger 33 samt dem aufliegenden Prüfobjekt 15 insgesamt mittels eines Rotationslagers 37 und eines Antriebs 36 um eine vertikale Rotationsachse R rotierbar. Zuvor werden die Schieber 26, 27 zum Verschließen der Kabinenöffnungen 17, 18 verschoben, wodurch gleichzeitig die daran befestigten Fördereinrichtungen 29, 30 aus der Transportebene nach oben verschoben werden, damit sie die Rotation des Trägers 33 nicht behindern. Das Fördermittel 35 wird angehalten, wenn das Prüfobjekt sich in der Prüfposition befindet, was mittels eines nicht gezeigten Sensors feststellbar sein kann. Es ist dabei nicht erforderlich, dass eine etwaige Rotationsachse des Prüfobjekts 15 exakt mit der Rotationsachse R des Trägers 33 zusammenfällt. Es können auch Einrichtungen zum Zentrieren des Prüfobjekts 15 um die Rotationsachse R vorgesehen sein, beispielsweise seitliche Schieber oder Mittel zum horizontalen Verschieben des Trägers 33.

Wenn sich das Prüfobjekt 15 in der Prüfposition befindet, wird die Röntgenquelle 12 eingeschaltet und lediglich der Träger 33 um die vertikale Rotationsachse R rotiert. Die Röntgenröhre 12 liefert für die Materialprüfung üblicherweise Röntgenstrahlung mit mindestens 60 kV, vorzugsweise mindestens 100 kV und/oder mindestens 1 kW, vorzugsweise mindestens 3 kW. Die gesamte Röntgenprüfung eines Prüfobjekts 15 erfolgt lediglich durch Rotation um die vertikale Rotationsachse R; irgendeine weitere Schwenkung oder Verschiebung des Prüfobjekts 15 und/oder der Röntgenvorrichtung 20 ist dazu nicht erforderlich. Am Prüfobjekt 15 angreifende Mittel, um das Prüfobjekt 15 in Rotation zu versetzen, beispielsweise Kegelrollen oder Mitnehmer, sind entbehrlich. Das Prüfobjekt 15 verbleibt während des gesamten Vorgangs einschließlich der Röntgenprüfung in der Transportebene T, so dass ein umständliches und zeitraubendes Entfernen des Prüfobjekts von der Fördervorrichtung 14 bzw. aus der Transportebene T entfällt.

Aufgrund der Erfassung zweier vollständiger Radialquerschnitte 52A, 52B des Prüfobjekts 15 durch die Detektionsabschnitte 13A, 13B ist in der Ausführungsform gemäß Figuren 1 bis 3 eine Rotation um 180° ausreichend, um ein vollständiges Einzelbild des Prüfobjekts 15 aufzunehmen. Im Vergleich zu einer herkömmlichen Prüfvorrichtung, bei der zur Aufnahme eines vollständigen Einzelbildes eine Rotation um 360° erforderlich ist, kann dadurch die Prüfdauer signifikant reduziert werden.

In vielen Fällen weist das Prüfobjekt 15 unterschiedlich dickwandige Bereiche auf. Beispielsweise ist bei einem Kraftfahrzeugrad das Felgenbett 53 relativ dünnwandig und die Speichen 54 sind relativ dickwandig. Vorzugsweise wird in diesen Fällen eine Mehrzahl von vollständigen Einzelbildern des Prüfobjekts aufgenommen, wobei jedes Einzelbild mit einem an eine der Wanddicken angepassten Parametersatz für die Röntgenvorrichtung aufgenommen wird. Beispielsweise wird bei einem Kraftfahrzeugrad ein vollständiges Einzelbild mit einem an das Felgenbett angepassten Parametersatz für die Röntgenvorrichtung und ein vollständiges Einzelbild mit einem an die Speichen angepassten Parametersatz für die Röntgenvorrichtung, jeweils durch Rotation um 180°, aufgenommen. Zweckmäßigerweise werden die aufgenommenen Einzelbilder anschließend in der Steuervorrichtung 38 zu einem Gesamtbild kombiniert, insbesondere indem sie geeignet gewichtet und übereinander gelegt werden. Das erzeugte Gesamtbild des Prüfobjekts 15 kann auf einem nicht gezeigten Anzeigeterminal für einen Bediener zur Anzeige gebracht werden.

Die Aufnahme einer Mehrzahl von Einzelbildern kann in der Ausführungsform gemäß Figuren 1 bis 3 insbesondere dadurch geschehen, dass der gesamte Röntgendetektor 13 mit einem an das Felgenbett angepassten einheitlichen Parametersatz betrieben und über 180° rotiert wird und anschließend mit einem an die Speichen angepassten einheitlichen Parametersatz betrieben und über 180° rotiert wird, oder umgekehrt. Alternativ dazu kann auch beispielsweise der Detektionsabschnitt 13A mit einem an das Felgenbett angepassten Parametersatz und der Detektionsabschnitt 13B mit einem an die Speichen angepassten Parametersatz betrieben und über 360° rotiert werden, oder umgekehrt. In jedem Fall können zwei vollständige Einzelbilder durch Rotation um insgesamt 360° aufgenommen werden.

Nach der Aufzeichnung des Röntgenbildes bzw. der Röntgenbilder wird die Röntgenquelle 12 ausgeschaltet. Die Rotation des Trägers 33 wird in einer zur Abförderung geeigneten Position beendet. Die Schieber 26, 27 werden in die Öffnungsposition verschoben, wodurch die Fördereinrichtungen 29, 30 in die Transportebene T verschoben werden. Das Transportmittel 35 des Trägers 33 und die Abfördereinrichtung 30 werden zum Abtransport des geprüften Prüfobjekts 15 durch die Ausgangsöffnung 18 und die Zufördereinrichtung 29 zum Zufördern des nächsten Prüfobjekts 15 angetrieben.

Sämtliche zuvor genannten Vorgänge werden mittels einer elektronischen programmierten Steuereinrichtung 38 automatisch gesteuert, die zu diesem Zweck beispielsweise über einen Datenbus mit den entsprechenden Antrieben, Sensoren, Stellgliedern und der Röntgenvorrichtung 20 verbunden ist. Die Steuereinrichtung 38 kann auch zur Auswertung der von dem Röntgendetektor 13 aufgezeichneten Röntgendaten programmiert sein und mit einem nicht gezeigten Eingabe-/Ausgabe-Terminal zum Bedienen der Prüfvorrichtung 10 und zur Anzeige des Prüfergebnisses verbunden sein.

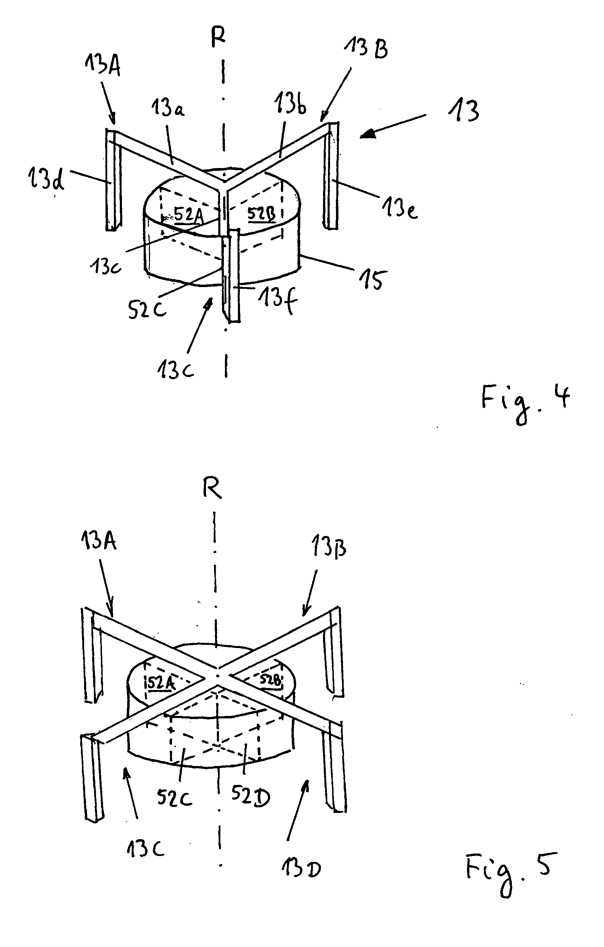

Die Ausführungsform gemäß Figur 4 verdeutlicht, dass der Röntgendetektor 13 zur Erfassung von mehr als zwei, in diesem Fall von drei Radialquerschnitten 52A, 52 B, 52C eingerichtet sein kann. Der Röntgendetektor 13 umfasst sechs Detektorzeilen 13a bis 13f. Die Detektorzeilen 13a, 13b, 13c sind horizontal sternförmig mit gleichen Winkelabständen von jeweils 120° angeordnet. An dem freien Ende jeder horizontalen Detektorzeile 13a, 13b, 13c ist jeweils eine vertikale Detektorzeile 13d, 13e, 13f befestigt. Die Detektorzeilen 13a, 13d bilden einen ersten Detektionsabschnitt 13A zur Erfassung eines ersten Radialquerschnitts 52A, die Detektorzeilen 13b, 13e einen zweiten Detektionsabschnitt 13B zur Erfassung eines zweiten Radialquerschnitts 52B und die Detektorzeilen 13c, 13f einen dritten Detektionsabschnitt 13C zur Erfassung eines dritten Radialquerschnitts 52C des Prüfobjekts 15. Wenn sämtliche Detektionsabschnitte 13A bis 13C mit denselben Verstärkungsfaktoren betrieben werden, kann ein vollständiges Einzelbild des Prüfobjekts 15 durch Rotation um lediglich 120° erhalten werden. Wenn die Detektionsabschnitte 13A bis 13C mit jeweils unterschiedlichen Verstärkungsfaktoren betrieben werden, können drei vollständige Einzelbilder des Prüfobjekts 15 durch Rotation um 360° erhalten werden.

Die Ausführungsform gemäß Figur 5 ist ähnlich aufgebaut wie die Ausführungsform gemäß Figur 4, wobei hier vier Detektionsabschnitte 13A bis 13D mit Winkelabständen von 90° zur Erfassung von vier Radialquerschnitten 52A bis 52D vorgesehen sind. In dieser Ausführungsform sind vorzugsweise zwei nicht gezeigte fan beam-Röntgenröhren vorgesehen, wobei eine Röntgenröhre zur Ausleuchtung der Detektionsabschnitte 13A, 13D und eine Röntgenröhre zur Ausleuchtung der Detektionsabschnitte 13B, 13C vorgesehen ist. Zur Prüfung von Kraftfahrzeugrädern können beispielsweise die Detektionsabschnitte 13A, 13D mit an das Felgenbett angepassten Verstärkungsfaktoren und die Detektionsabschnitte 13B, 13C mit an die Speichen angepassten Verstärkungsfaktoren betrieben werden, oder umgekehrt. Es können dann zwei vollständige Einzelbilder des Prüfobjekts 15 durch Rotation um lediglich 180° erhalten werden. Wenn sämtliche Detektionsabschnitte 13A bis 13D mit denselben Verstärkungsfaktoren betrieben werden, kann ein vollständiges Einzelbild des Prüfobjekts 15 durch Rotation um lediglich 90° erhalten werden. Wenn die Detektionsabschnitte 13A bis 13D mit jeweils unterschiedlichen Verstärkungsfaktoren betrieben werden, können vier vollständige Einzelbilder des Prüfobjekts 15 durch Rotation um 360° erhalten werden.

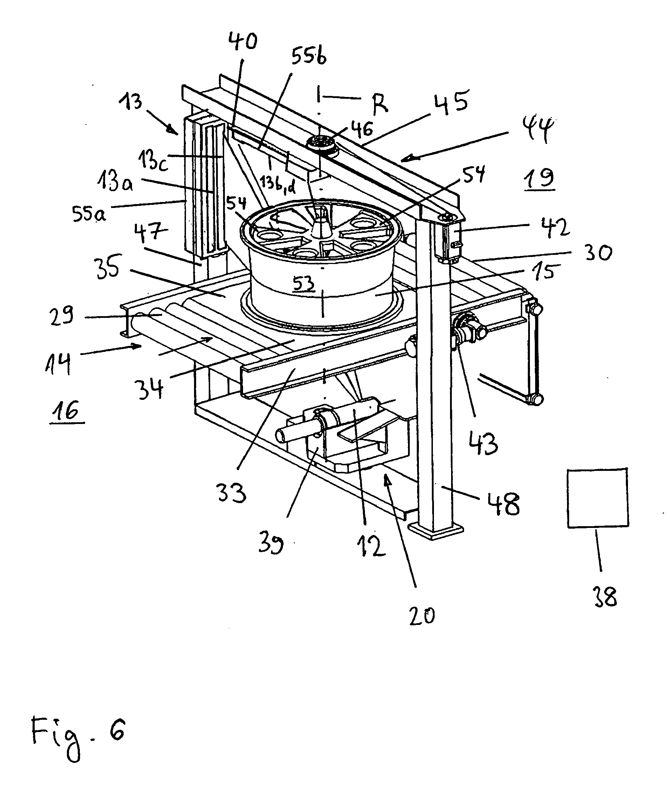

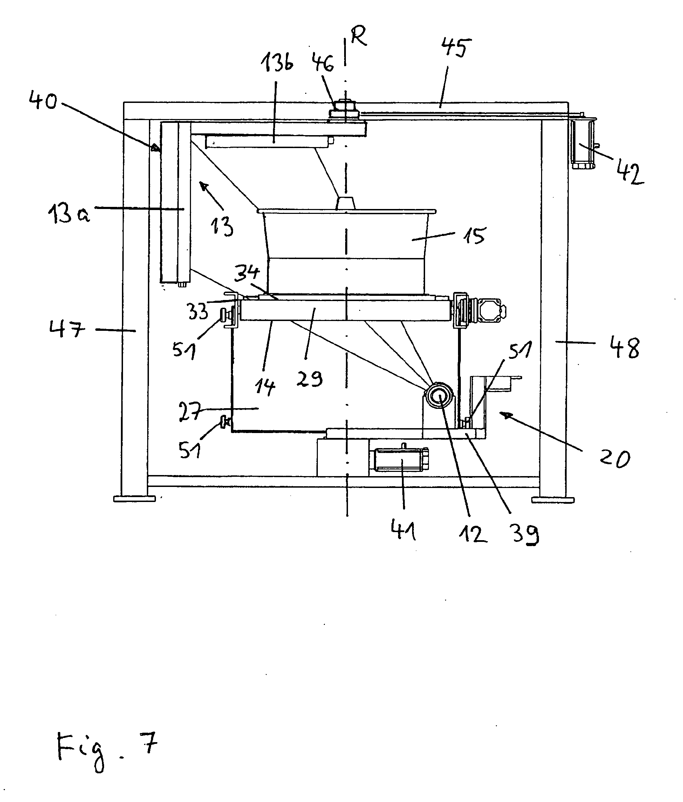

Die Figuren 6 und 7 zeigen eine alternative Ausführungsform, bei der der Träger 33 während der Röntgenprüfung stillsteht und daher kein Drehlager 37 aufweist, und stattdessen die gesamte Röntgenvorrichtung 20 einheitlich um die vertikale Rotationsachse R rotiert. Die Kabine 11 ist in den Figuren 6 und 7 aus Gründen der Übersichtlichkeit nicht gezeigt. Die Röntgenröhre 12 und der Röntgendetektor 13 sind vorzugsweise jeweils an einem um die vertikale Rotationsachse R rotierbaren Träger 39 bzw. 40 angebracht, die ober- bzw. unterhalb der Transportebene angeordnet sind und jeweils einen eigenen Rotationsantrieb 41 bzw. 42 aufweisen, wodurch eine vollständige Umdrehung ohne Kollision mit der Fördervorrichtung 14 ermöglicht wird. Die Rotationsantriebe 41, 42 werden von der elektronischen Steuereinrichtung 38 gesteuert, so dass eine synchrone Rotation von Röntgenquelle 12 und Röntgendetektor 13 sichergestellt ist. Die Rotationsträger 39 und 40 sind daher vorzugsweise mechanisch entkoppelt und nur durch Antriebssteuerung gekoppelt. Dies ist aber nicht zwingend der Fall, eine mechanische Kopplung der Rotationsträger 39 und 40 ist ebenfalls denkbar. Die Prüfvorrichtung 10 umfasst ein Trägergestell 44 für das Rotationslager 46 für den oberhalb der Transportebene angeordneten rotierbaren Träger 40. Das Trägergestell 44 kann insbesondere einen horizontalen Träger 45 und zwei diesen tragende vertikale Träger 47, 48 aufweisen. Aufgrund des Stillstands des Trägers 33 müssen die Fördereinrichtungen 29, 30 nicht vertikal verstellbar sein und können beispielsweise an dem Träger 33 angebracht sein.

In der Ausführungsform gemäß Figuren 6, 7 schließt der zentrale Röntgenstrahl aus der Röntgenquelle 12 einen Winkel im Bereich von 30° bis 60° mit der Rotationsachse R ein, so dass der halbe Querschnitt des Prüfobjekts 15 ausgeleuchtet wird, wie am besten aus Fig. 7 ersichtlich ist. Der Röntgendetektor 13 ist hier asymmetrisch zu der Rotationsachse R angeordnet. In diesem Ausführungsbeispiel ist eine konventionelle Röntgenröhre, die einen Strahlfächer von maximal 40° aufweist, und ein insgesamt L-förmiger Röntgendetektor 13 mit einer vertikalen Doppelzeile 55a und eine horizontalen Doppelzeile 55b vorgesehen. Die Doppelzeile 55a weist zwei parallele, unabhängig ansteuerbare Detektorzeilen 13a, 13c und die Doppelzeile 55b zwei parallele, unabhängig ansteuerbare Detektorzeilen 13b, 13d auf. Die Detektorzeilen 13a, 13b bilden einen ersten Detektionsabschnitt zur Erfassung eines ersten vollständigen Radialquerschnitts des Prüfteils 15 und die Detektorzeilen 13b, 13d bilden einen zweiten Detektionsabschnitt zur Erfassung eines zweiten vollständigen Radialquerschnitts des Prüfteils 15. Durch Ansteuerung des ersten Detektionsabschnitts 13a, 13b mit an das Felgenbett angepassten Verstärkungsfaktoren und Ansteuerung des zweiten Detektionsabschnitts 13c, 13d mit an die Speichen 54 angepassten Verstärkungsfaktoren, oder umgekehrt, können zwei entsprechende vollständige Einzelbilder des Kraftfahrzeugrads 15 durch Rotation der Röntgenvorrichtung 20 um 360° aufgenommen werden. Es

In einer nicht gezeigten Ausführungsform analog zu den Figuren 6 und 7 steht die Röntgenvorrichtung 20 mit L-förmigem Röntgendetektor 13 fest und das Prüfteil 15 ist für die Röntgenprüfung rotierbar.

Die Ausführungsform gemäß Figur 8 unterscheidet sich von der gemäß Figuren 1 bis 3 darin, dass der Röntgendetektor 13 drei Doppelzeilen 55a, 55b, 55c aufweist, wobei jede Doppelzeile 55a, 55b, 55c zwei parallele, unabhängig ansteuerbare Detektorzeilen 13a, 13b bzw. 13c, 13d bzw. 13e, 13f aufweist. Die Detektorzeilen 13a, 13c, 13f bilden einen ersten U-förmigen Detektionsabschnitt zur Erfassung eines ersten vollständigen Querschnitts des Prüfteils 15 und die Detektorzeilen 13b, 13d, 13f bilden einen zweiten Detektionsabschnitt zur Erfassung eines zweiten vollständigen Querschnitts des Prüfteils 15. Durch Ansteuerung des ersten Detektionsabschnitts 13a, 13c, 13e mit an das Felgenbett angepassten Verstärkungsfaktoren und Ansteuerung des zweiten Detektionsabschnitts 13c, 13d, 13f mit an die Speichen 54 angepassten Verstärkungsfaktoren, oder umgekehrt, können zwei entsprechende vollständige Einzelbilder des Kraftfahrzeugrads 15 durch Rotation, hier des Prüfteils 15, um lediglich 180° aufgenommen werden.

In den Ausführungsformen gemäß Fig. 6 bis 8 können auch mehr als zwei parallel angeordnete, unabhängig ansteuerbare Detektionsflächen pro Detektorzeile 55a, 55b vorgesehen sein.

## Patentansprüche

1. Vorrichtung zur Materialprüfung von Prüfobjekten (15) mittels Röntgenstrahlung, umfassend eine Röntgenvorrichtung (20) die eine Röntgenquelle (12) zum Durchstrahlen eines in einer Prüfposition auf einem **Träger (33)** gehaltenen Prüfobjekts (15) und einen als Zeilendetektor ausgebildeten Röntgendetektor (13) aufweist, und eine elektronische Steuereinrichtung (38), die zur Steuerung der Röntgenvorrichtung (20) eingerichtet ist, wobei während der Röntgenprüfung das Prüfobjekt (15) und die Röntgenvorrichtung (20) relativ zueinander lediglich um eine im Wesentlichen vertikale Rotationsachse R rofierbar sind ohne weitere Rotationen oder translatorische Bewegungen von Prüfobjekt (15) und Röntgenvorrichtung (20) relativ zueinander während der Prüfung, wobei der Röntgendetektor (13) mindestens zwei Detektionsabschnitte (13A, 13B, ...) aufweist, die jeweils zur Erfassung des Prüfobjekts über einen vollständigen Radialquerschnitt (52A, 52B, ...) eingerichtet sind,
**dadurch gekennzeichnet, dass**
- die Röntgenvorrichtung (20) in einer Strahlenschutzkabine (11) angeordnet ist,
- eine translatorische Fördereinrichtung (14) zur seriellen Förderung der Prüfobjekte (15) durch die Strahlenschutzkabine (11) vorgesehen ist, die eine im Innern der Strahlenschutzkabine (11) angeordnete Zuführeinrichtung (29) zum Zufördern von Prüfobjekten (15) zu einem Träger (33) und eine im Innern der Strahlenschutzkabine (11) angeordnete Abfördereinrichtung (30) zum Abfördern der Prüfobjekte (15) von dem Träger (33) aufweist,
- die Strahlenschutzkabine (11) Schieber (26, 27) zum Verschließen einer Eingangsöffnung (17) und einer Ausgangsöffnung (18) im Prüfbetrieb und zum Öffnen im Ladebetrieb aufweist,
- die Fördereinrichtung (14) eine durchgehende Transportebene (T) ausbildet und das Prüfobjekt (15) während des gesamten Lade- und Prüfvorgangs in der durchgehenden Transportebene (T) verbleibt,
- die Zufördereinrichtung (29) an dem Schieber (26) und die Abfördereinrichtung (30) an dem Schieber (27) befestigt ist, so dass ein Verschieben der Schieber (26, 27) in eine Offenstellung gleichzeitig die Zuführeinrichtung (29) und die Abführeinrichtung (30) in die Transportebene (T) verschiebt und ein Verschiebend der Schieber (26, 27) in eine Geschlossenstellung gleichzeitig die Zuführeinrichtung (29) und die Abführeinrichtung (30) aus der Transportebene (T) heraus verschiebt.

2. Vorrichtung nach Anspruch 1, wobei der Röntgendetektor (13) bogenförmig um das Prüfobjekt (15) herum angeordnet ist.

3. Vorrichtung nach einem der Ansprüche 1 oder 2, wobei die Detektionsabschnitte (13A, 13B, ...) L-förmig ausgebildet sind.

4. Vorrichtung nach einem der vorangehenden Ansprüche, wobei der Röntgendetektor (13) zur Erfassung des Prüfobjekts (15) über einen vollständigen Gesamtquerschnitt eingerichtet ist.

5. Vorrichtung nach einem der vorangehenden Ansprüche, wobei die Steuereinrichtung (38) die Röntgenvorrichtung (20) für jedes Prüfobjekt (15) zur Aufnahme von mindestens zwei vollständigen Einzelbildern des Prüfobjekts mit jeweils unterschiedlichen Betriebsparametern für die Röntgenvorrichtung (20) ansteuert.

6. Vorrichtung nach Anspruch 5, wobei für die Aufnahme eines Einzelbilds das Prüfobjekt (15) und die Röntgenvorrichtung (20) relativ zueinander über einen Rotationswinkel von weniger als 360° rotiert werden.

7. Vorrichtung nach Anspruch 5 oder 6, wobei für die Aufnahme eines Einzelbilds das Prüfobjekt (15) und die Röntgenvorrichtung (20) relativ zueinander über einen Rotationswinkel von etwa 180° rotiert werden.

8. Vorrichtung nach einem der Ansprüche 5 bis 7, wobei die Steuereinrichtung (38) zur geeigneten Kombination aufgenommener Einzelbilder des Prüfobjekts (15) zu einem Gesamtbild eingerichtet ist.

9. Vorrichtung nach einem der Ansprüche 5 bis 8, wobei die Steuereinrichtung (38) zur Einstellung der Betriebsparameter auf unterschiedlich dickwandige Bereiche des Prüfobjekts (15) eingerichtet ist.

10. Vorrichtung nach einem der vorangehenden Ansprüche, wobei zur Röntgenprüfung der Träger (33) gemeinsam mit dem darauf gehaltenen Prüfobjekt (15) insgesamt um die Rotationsachse R rotierbar ist.

11. Vorrichtung nach einem der vorangehenden Ansprüche, wobei das Prüfobjekt (15) während des gesamten Lade- und Prüfvorgangs in einer durchgehenden Transportebene T verbleibt.

12. Vorrichtung nach einem der vorangehenden Ansprüche, wobei die Röntgenquelle (12) eine Fächerstrahl-Röntgenröhre mit einem Fächerwinkel von mindestens 45° ist.

13. Vorrichtung nach einem der vorangehenden Ansprüche, wobei die Röntgenquelle (12) und/oder der Röntgendetektor (13) zur Anpassung an unterschiedliche Prüfobjekte (15) relativ zu dem Prüfobjekt verstellbar sind.

14. Vorrichtung nach einem der vorangehenden Ansprüche, wobei die die Steuereinrichtung (38) zur automatischen Zu- und Abförderung der Prüfobjekte (15) in die bzw. aus der Prüfposition eingerichtet ist.

15. Vorrichtung nach einem der vorangehenden Ansprüche, umfassend eine die Umgebung gegen Röntgenstrahlung abschirmende Strahlenschutzkabine (11).

## Claims

1. A device for the material testing of test objects (15) by means of x-ray radiation, comprising an x-ray device (20), which has an x-ray source (12) for the irradiation of a test object (15) held in a testing position on a carrier (33) and an x-ray detector (13) configured as a line detector, and an electronic control apparatus (38), which is designed to control the x-ray device (20), wherein during the x-ray test the test object (15) and the x-ray device (20) can be rotated relative to each other about only one essentially vertical rotation axis R without further rotations or translatory movements of the test object (15) and the x-ray device (20) relative to each other during the test, wherein the x-ray detector (13) has at least two detection sections (13A, 13B, ...), which are each designed to detect the test object over a complete radial cross section (52A, 52B, ...),
**characterised in that**
- the x-ray device (20) is arranged in a radiation protection cabin (11),
- a translatory conveyor apparatus (14) for serially conveying the test objects (15) through the radiation protection cabin (11) is provided, which has a feed apparatus (29) arranged in the interior of the radiation protection cabin (11) for feeding test objects (15) to a carrier (33) and a discharge apparatus (30) arranged in the interior of the radiation protection cabin (11) for conveying the test objects (15) away from the carrier (33),
- the radiation protection cabin (11) has sliders (26, 27) for closing an input opening (17) and an output opening (18) during testing and for opening them during loading,
- the conveyor apparatus (14) forms a continuous transport plane (T) and the test object (15) remains in the continuous transport plane (T) during the entire loading and testing process,
- the feed apparatus (29) is fastened to the slider (26) and the discharge apparatus (30) is fastened to the slider (27), so that a displacement of the sliders (26, 27) into an open position simultaneously displaces the feed apparatus (29) and the discharge apparatus (30) into the transport plane (T) and a displacement of the sliders (26, 27) into a closed position simultaneously displaces the feed apparatus (29) and the discharge apparatus (30) out of the transport plane (T).

2. The device according to Claim 1, wherein the x-ray detector (13) is arranged in an arc-shaped manner around the test object (15).

3. The device according to one of Claims 1 or 2, wherein the detection sections (13A, 13B, ...) are L-shaped.

4. The device according to one of the preceding claims, wherein the x-ray detector (13) is designed for detecting the test object (15) over a complete total cross section.

5. The device according to one of the preceding claims, wherein the control apparatus (38) activates the x-ray device (20) for each test object (15) to capture at least two complete individual images of the test object with in each case different operating parameters for the x-ray device (20).

6. The device according to Claim 5, wherein the test object (15) and the x-ray device (20) are rotated relative to each other over a rotation angle of less than 360° to capture an individual image.

7. The device according to Claim 5 or 6, wherein the test object (15) and the x-ray device (20) are rotated relative to each other over a rotation angle of approximately 180° to capture an individual image.

8. The device according to one of Claims 5 to 7, wherein the control apparatus (38) is designed for the suitable combination of captured individual images of the test object (15) to form a total image.

9. The device according to one of Claims 5 to 8, wherein the control apparatus (38) is designed to set the operating parameters on regions of the test object (15) which have walls of different thickness.

10. The device according to one of the preceding claims, wherein the carrier (33) together with the test object (15) held thereon can be rotated as a whole about the rotation axis R for the x-ray test.

11. The device according to one of the preceding claims, wherein the test object (15) remains in a continuous transport plane T during the entire loading and testing process.

12. The device according to one of the preceding claims, wherein the x-ray source (12) is a fan beam x-ray tube with a fan angle of at least 45°.

13. The device according to one of the preceding claims, wherein the x-ray source (12) and/or the x-ray detector (13) can be adjusted relative to the test object for adaptation to different test objects (15).

14. The device according to one of the preceding claims, wherein the control apparatus (38) is designed for the automatic feed and discharge of the test objects (15) into and out of the testing position.

15. The device according to one of the preceding claims, comprising a radiation protection cabin (11) which shields the environment from x-ray radiation.

## Revendications

1. Dispositif de contrôle de matériau d'objets à tester (15) par rayonnement radiographique, comprenant un dispositif radiographique (20) qui présente une source radiographique (12) pour irradier un objet à tester (15) maintenu en position de test sur un support (33) et un détecteur radiographique (13) réalisé sous forme d'un détecteur à balayage de lignes et un dispositif de commande électrique (38) qui est conçu pour commander le dispositif radiographique (20), dans lequel, pendant le contrôle radiographique, l'objet à tester (15) et le dispositif radiographique (20) peuvent tourner l'un par rapport à l'autre simplement autour d'un axe de rotation R sensiblement vertical sans autres rotations ou mouvements translatoires de l'objet à tester (15) et du dispositif radiographique (20) l'un par rapport à l'autre pendant le contrôle, le détecteur radiographique (13) présentant au moins deux segments de détection (13A, 13B, ...) qui sont conçus respectivement pour détecter l'objet à tester sur une section transversale radiale complète (52A, 52B, ...),
**caractérisé en ce que**
- le dispositif radiographique (20) est disposé dans une cabine anti-rayons (11),
- un dispositif de convoyage translatoire (14) est prévu pour le convoyage en série des objets à tester (15) dans la cabine anti-rayons (11) qui présente un dispositif d'acheminement (29) disposé à l'intérieur de la cabine anti-rayons (11) pour acheminer les objets à tester (15) vers un support (33) et un dispositif d'évacuation (30) disposé à l'intérieur de la cabine anti-rayons (11) pour évacuer les objets à tester (15) du support (33),
- la cabine anti-rayons (11) présente des curseurs (26, 27) pour fermer une ouverture d'entrée (17) et une ouverture de sortie (18) en mode contrôle et pour l'ouvrir en mode chargement,
- le dispositif de convoyage (14) constitue un plan de transport continu (T) et l'objet à tester (15) reste dans le plan de transport continu (T) pendant tout le processus de chargement et de contrôle,
- le dispositif d'acheminement (29) est fixé au curseur (26) et le dispositif d'évacuation (30) au curseur (27), de sorte qu'un passage des curseurs (26, 27) en position ouverte décale en même temps le dispositif d'acheminement (29) et le dispositif d'évacuation (30) dans le plan de transport (T) et qu'une extrémité de décalage des curseurs (26, 27) vers une position fermée décale en même temps le dispositif d'acheminement (29) et le dispositif d'évacuation (30) hors du plan de transport (T).

2. Dispositif selon la revendication 1, dans lequel le détecteur radiographique (13) est disposé en arc de cercle autour de l'objet à tester (15).

3. Dispositif selon une des revendications 1 ou 2, dans lequel les segments de détection (13A, 13B, ...) sont réalisés en forme de L.

4. Dispositif selon une des revendications précédentes, dans lequel le détecteur radiographique (13) est conçu pour détecter l'objet à tester (15) sur une section transversale complète.

5. Dispositif selon une des revendications précédentes, dans lequel le dispositif de commande (38) commande le dispositif radiographique (20) pour chaque objet à tester (15) dans le but de recevoir au moins deux images individuelles complètes de l'objet à tester avec respectivement des paramètres de fonctionnement différents pour le dispositif radiographique (20).

6. Dispositif selon la revendication 5, dans lequel, pour recevoir une image individuelle, l'objet à tester (15) et le dispositif radiographique (20) tournent l'un par rapport à l'autre sur un angle de rotation de moins de 360°.

7. Dispositif selon la revendication 5 ou 6, dans lequel, pour recevoir une image individuelle, l'objet à tester (15) et le dispositif radiographique (20) tournent l'un par rapport à l'autre sur un angle de rotation d'environ 180°.

8. Dispositif selon une des revendications 5 à 7, dans lequel le dispositif de commande (38) est conçu pour combiner de manière appropriée les images individuelles prises de l'objet à tester (15) en une image globale.

9. Dispositif selon la revendication 5 à 8, dans lequel le dispositif de commande (38) est conçu pour définir des paramètres de fonctionnement sur des zones d'épaisseurs différentes de l'objet à tester (15).

10. Dispositif selon une des revendications précédentes, dans lequel, pour le contrôle radiographique, le support (33) peut tourner globalement autour de l'axe de rotation R avec l'objet à tester (15) qu'il maintient.

11. Dispositif selon une des revendications précédentes, dans lequel l'objet à tester (15) reste dans un plan de transport continu T pendant tout le processus de chargement et de contrôle.

12. Dispositif selon une des revendications précédentes, dans lequel la source radiographique (12) est un tube radiographique à faisceaux plats dont l'angle de faisceau est d'au moins 45°.

13. Dispositif selon une des revendications précédentes, dans lequel la source radiographique (12) et/ou le détecteur radiographique (13) sont réglables par rapport à l'objet à tester pour s'adapter à différents objets à tester (15).

14. Dispositif selon une des revendications précédentes, dans lequel le dispositif de commande (38) est conçu pour l'acheminement et l'évacuation automatique des objets à tester (15) vers ou depuis la position de contrôle.

15. Dispositif selon une des revendications précédentes, comprenant une cabine anti-rayons (11) faisant écran au rayonnement radiographique.
